# EUROPEAN PATENT APPLICATION

(11) **EP 4 585 433 A1**
(43) Date of publication of application: **16.07.2025**
(21) Application number: 24150936.3
(22) Date of filing: 09.01.2024
(51) Int. Cl.: B60G 21/073, B60P 1/04, B60G 17/017, B60P 1/16

(54) **FLUID-BASED SUSPENSION SYSTEM OF A VEHICLE**

(71) Applicant: Volvo Construction Equipment AB, 631 85 Eskilstuna (SE)
(72) Inventor: MATTSSON, Per, 294 91 Sölvesborg (SE); JOHANSSON, Thomas, 364 30 Åseda (SE); JOHANSSON, Håkan, 352 42 Växjö (SE); MORELIUS, Robert, 635 19 Eskilstuna (SE); STIGSSON, Håkan, 342 53 Lönashult (SE)
(74) Representative: Kransell & Wennborg KB

(57) **Abstract**

A fluid-based suspension system (200) of a vehicle, comprising:
- a first suspension device (210) comprising a movable first piston (212) dividing a first cylinder into a first piston rod side chamber (213) and a first piston side chamber (214);
- a second suspension device (220) comprising a movable second piston (222) dividing a second cylinder into a second piston rod side chamber (223) and a second piston side chamber (224);
- a fluid connection system (230) configured to set the fluid-based suspension system (200) to one of a first and a second operating mode;

wherein, in the first operating mode, the first piston rod side chamber is fluidly connected to the second piston side chamber in a first cross-connection (231) and the first piston side chamber is fluidly connected to the second piston rod side chamber in a second cross-connection (232), the first and second cross-connections being fluidly isolated from one another; and
in the second operating mode, all of the first piston rod side chamber, the first piston side chamber, the second piston rod side chamber, and the second piston side chamber are fluidly connected to one another.

## Description

### TECHNICAL FIELD

The disclosure relates generally to suspension of vehicles. In particular aspects, the disclosure relates to a fluid-based suspension system of a vehicle, a method for controlling the fluid-based suspension system, a vehicle, a computer system, a computer program product, and a non-transitory computer-readable storage medium. The disclosure can be applied to heavy-duty vehicles, such as trucks and construction machines, among other vehicle types. Although the disclosure may be described with respect to a particular vehicle, the disclosure is not restricted to any particular vehicle.

### BACKGROUND

A rigid hauler may be equipped with a hydraulic suspension system providing suspension at a rear axle as well as a front axle of the hauler. To provide stability at cornering, the hydraulic suspension system may be cross-connected. A cross-connected hydraulic suspension system is stiff and may act as an anti-roll bar, hence providing sufficient dynamic stability of the hauler.

The suspension system carries a frame which in turn may carry a dump body, a payload, and so on. Since the frame is usually less stiff than the cross-connected suspension system, there is a risk that the frame will twist when the hauler is standing on uneven ground. The twisting may lead to lateral movements of the dump body relative to the frame, and a mismatch when the dump body is lowered after dumping. This in turn may lead to increased wear on components of the hauler. A less stiff suspension system may reduce the twisting, but at the expense of reduced dynamic stability of the hauler.

### SUMMARY

According to a first aspect of the disclosure, a fluid-based suspension system of a vehicle is provided. The fluid-based suspension system comprises:
- a first fluid suspension device provided on a first side of the vehicle and providing suspension between an axle and a frame of the vehicle, the first fluid suspension device comprising a first cylinder, a movable first piston, and a first piston rod attached to the first piston, the movable first piston dividing an internal space of the first cylinder into a first piston rod side chamber and a first piston side chamber;
- a second fluid suspension device provided on a second side of the vehicle and providing suspension between the axle and the frame, the second fluid suspension device comprising a second cylinder, a movable second piston, and a second piston rod attached to the second piston, the movable second piston dividing an internal space of the second cylinder into a second piston rod side chamber and a second piston side chamber;
- a fluid connection system comprising a valve arrangement configured to selectively set the fluid-based suspension system to one of a first operating mode and a second operating mode;
   wherein, in the first operating mode, the fluid connection system is arranged to fluidly connect the first piston rod side chamber to the second piston side chamber in a first cross-connection and to fluidly connect the first piston side chamber to the second piston rod side chamber in a second cross-connection, the first and second cross-connections being fluidly isolated from one another; and
   in the second operating mode, the fluid connection system is arranged to fluidly connect all of the first piston rod side chamber, the first piston side chamber, the second piston rod side chamber, and the second piston side chamber to one another.

The first aspect of the disclosure may seek to provide an in at least some aspect improved fluid-based suspension system suitable for a vehicle such as a working machine, e.g., a rigid hauler. In particular, it may seek to provide a fluid-based suspension system that reduces twisting of the frame when the vehicle is standing on uneven ground, such as during dumping, without compromising dynamic stability during travel. A technical benefit may include that, thanks to the possibility to selectively set the suspension system to the first or second operating mode, a stiff suspension may be achieved during travel by selecting the first operating mode, and a significantly lower stiffness may be achieved during dumping by selecting the second operating mode. In this way, twisting of the frame when the vehicle is standing on uneven ground during a dumping operation may be avoided when the second operating mode is selected, thereby reducing the risk that components will wear out or break during dumping. When instead the first operating mode is selected, dynamic instability can be prevented during travel. The first operating mode herein corresponds to a cross-connected mode, and the second operating mode corresponds to a pendulum-connected mode.

Optionally in some examples, including in at least one preferred example, the first and second piston rods are both attached to one of the axle and the frame, and wherein the first and second cylinders are both attached to another one of the axle and the frame.

Optionally in some examples, including in at least one preferred example, the first and second piston rods are both attached to the axle, and wherein the first and second cylinders are both attached to the frame.

Optionally in some examples, including in at least one preferred example, the valve arrangement comprises a single valve. A technical benefit may include a robust valve arrangement with few components.

Optionally in some examples, including in at least one preferred example, the single valve is a valve having four connections and two positions, the valve being movable between a first position in which the fluid-based suspension system is set to the first operating mode and a second position in which the fluid-based suspension system is set to the second operating mode. Such a valve is usually referred to as a 4/2 valve. A technical benefit may include a space-efficient and robust valve arrangement.

According to a second aspect of the disclosure, a computer-implemented method for controlling the fluid-based suspension system according to the first aspect is provided. The method comprises:
- determining, by processing circuitry of a computer system, whether a predetermined activation condition for activating the second operating mode is fulfilled;
- in response to determining that the activation condition is fulfilled, activating, by the processing circuitry, the second operating mode.

The second aspect of the disclosure may seek to provide an in at least some aspect improved method of controlling a fluid-based suspension system. In particular, the second aspect of the disclosure may seek to provide such a method by means of which dynamic stability may be achieved during travel, while as a risk for twisting of the frame during e.g. dumping while standing on uneven ground is reduced. A technical benefit may include that the second operating mode, corresponding to the pendulum-connected mode, can be activated whenever this is deemed to be advantageous based on a predetermined activation condition.

Optionally in some examples, including in at least one preferred example, the fluid-based suspension system is initially operated in the first operating mode, wherein the method comprises:
- in response to determining that the activation condition is not fulfilled, continuing to operate, by the processing circuitry, the fluid-based suspension system in the first operating mode. Hence, the first operating mode is a default operating mode of the fluid-based suspension system. A technical benefit may include that sufficient dynamic stability may be achieved in all operations that do not benefit from a reduced stiffness of the fluid-based suspension system.

Optionally in some examples, including in at least one preferred example, the method further comprises:
- during operation of the fluid-based suspension system in the second operating mode, detecting, by the processing circuitry, that a predetermined deactivation condition is fulfilled;
- in response to detecting that the deactivation condition is fulfilled, controlling, by the processing circuitry, the fluid-based suspension system to assume the first operating mode.

A technical benefit may include that the suspension system can be controlled to revert to the stiffer configuration of the first operating mode whenever this is deemed to be advantageous, based on the deactivation condition being fulfilled.

Optionally in some examples, including in at least one preferred example, the deactivation condition is considered fulfilled when a vehicle speed of the vehicle increases above a speed threshold. A technical benefit may include that the dynamic stability can be ensured during travel.

Optionally in some examples, including in at least one preferred example, the method further comprises:
- detecting, by the processing circuitry, that a dumping condition applies, in which the vehicle is dumping or is preparing to dump a payload carried by a tiltable body of the vehicle, wherein the activation condition is considered fulfilled when the dumping condition applies.

A technical benefit may include that the lower stiffness of the second operating mode is achieved during dumping, when the frame may otherwise typically be prone to twisting if the vehicle is standing on an uneven ground.

Optionally in some examples, including in at least one preferred example, the deactivation condition is considered fulfilled when the dumping condition no longer applies. A technical benefit may include that sufficient dynamic stability for travelling may be achieved as soon as the dumping operation is completed.

Optionally in some examples, including in at least one preferred example, the method further comprises:
- during operation of the fluid-based suspension system in the second operating mode, detecting, by the processing circuitry, that the payload has been dumped and that the tiltable body is in a tilted position, and in response thereto controlling, by the processing circuitry, the fluid-based suspension system to reduce a distance between the axle and the frame before the tiltable body reaches a folded position in which it rests on the frame.

Initially after dumping the payload, the pressure in the fluid-based suspension system is not adapted to the new weight and the frame is raised to a top position where the pendulum movement is mechanically blocked. Therefore, the system has to regulate the pressure for a new, lower position of the frame. A technical benefit may thereby include that the pendulum movement achieved in the second operating mode is preserved after dumping the payload, when the weight of the vehicle is reduced.

Optionally in some examples, including in at least one preferred example, detecting that the payload has been dumped comprises detecting that a weight of the vehicle has decreased.

Optionally in some examples, including in at least one preferred example, a switch between the first and second operating modes is only performed when a distance between the frame and the axle at the first suspension device does not differ from a distance between the frame and the axle at the second suspension device by more than a predetermined distance threshold. A technical benefit may include that changes in stiffness of the suspension system are not initiated when the vehicle is standing on uneven ground.

Optionally in some examples, including in at least one preferred example, a switch from the first operating mode to the second operating mode is only performed when a first fluid pressure in the first cross-connection does not differ from a second fluid pressure in the second cross-connection by more than a predetermined pressure threshold. In the second operating mode, the fluid pressure is the same in all four chambers of the fluid-based suspension system. A technical benefit may include that changes in stiffness of the suspension system are not initiated when the vehicle is standing on uneven ground.

According to a third aspect of the disclosure, a computer system comprising processing circuitry configured to perform the method according to the second aspect is provided.

According to a fourth aspect of the disclosure, a vehicle comprising the fluid-based suspension system according to the first aspect is provided. The vehicle may be a heavy-duty working machine, such as a rigid hauler or similar. The vehicle may be electrically driven and/or autonomous. In some examples, the vehicle may be an electrically driven four-wheel drive rigid hauler.

Optionally in some examples, including in at least one preferred example, the vehicle further comprises the computer system according to the third aspect.

Optionally in some examples, including in at least one preferred example, the vehicle comprises a first axle and a second axle, wherein the fluid-based suspension system is a first fluid-based suspension system arranged to provide suspension between the frame of the vehicle and the first axle, and wherein the vehicle further comprises a second fluid-based suspension system arranged to provide suspension between the frame and the second axle, the second fluid-based suspension system being a cross-connected fluid-based suspension system. A technical benefit may include that the second fluid-based suspension system may stabilize the vehicle during travel as well as during dumping.

Optionally in some examples, including in at least one preferred example, the vehicle further comprises a tiltable body, the tiltable body being mounted to the frame such that it is tiltable about a pivot axis located closer to the second axle than to the first axle of the vehicle. A technical benefit may include that, since the pivot axis is provided in proximity of the second axle at which the cross-connected second fluid-based suspension system is provided, sufficient stability is ensured during dumping.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic front view of an exemplary vehicle according to an example.
**FIG. 2** is a schematic side view of the vehicle in FIG. 1.
**FIG. 3** is a schematic front view of a fluid-based suspension system according to an example.
**FIG. 4** is a schematic diagram of a fluid-based suspension system according to an example.
**FIG. 5** is a flow-chart illustrating a method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

A heavy-duty working machine, such as a rigid hauler, may be equipped with a hydraulic suspension system providing suspension at a rear axle as well as a front axle of the working machine. To provide dynamic stability at cornering, the hydraulic suspension system may be cross-connected, as will be further described below with reference to the drawings. A cross-connected hydraulic suspension system is stiff and may act as an anti-roll bar, hence providing sufficient dynamic stability of the working machine.

The suspension system carries a frame which in turn may carry a dump body, a payload, and so on. In the case of an electric working machine, the frame may also carry batteries. Since the frame is usually less stiff than the cross-connected suspension system, there is a risk that the frame will twist when the hauler is standing on uneven ground, in particular when the hauler is heavily loaded with goods. The twisting may lead to lateral movements of the dump body relative to the frame, and a mismatch may occur when the dump body is lowered toward the frame after dumping. This in turn may lead to increased wear on components of the hauler due to unwanted contact and friction between parts.

A less stiff suspension system may reduce the twisting and thereby also the wear on components during dumping. However, a reduced stiffness comes with a lower stability, meaning that the hauler will be less stable during travel, such as during cornering.

The present disclosure aims at overcoming this by providing a suspension system that can be selectively settable to one of a first operating mode, providing dynamic stability during travel, and a second operating mode, reducing the risk of twisting during dumping while standing on uneven ground.

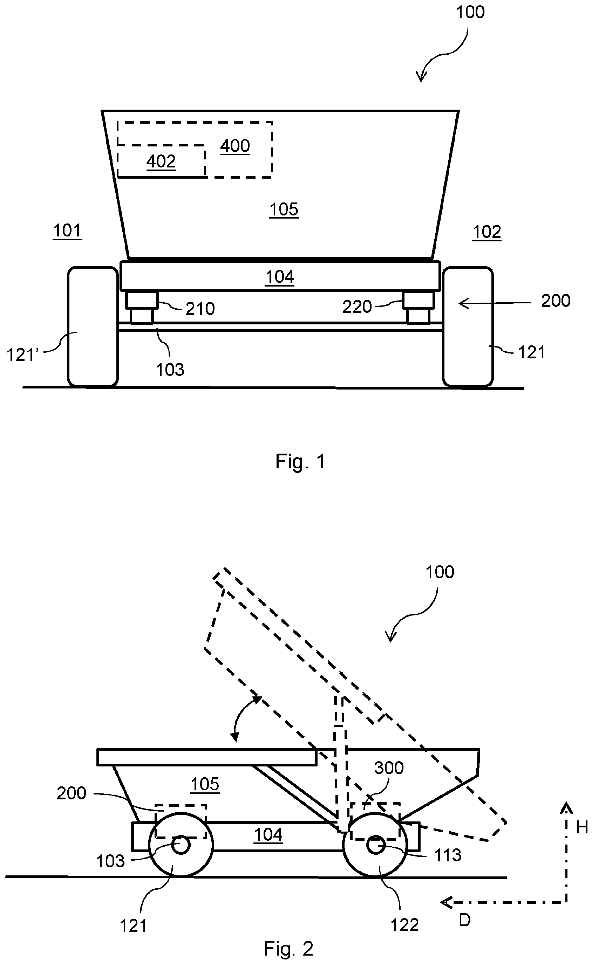

**FIG. 1** illustrates an exemplary vehicle 100 according to an example in a front view. **FIG. 2** illustrates the vehicle in a side view. The vehicle 100 is in the illustrated example an autonomous working machine in the form of a rigid hauler provided with a tiltable body 105 mounted to a frame 104 of the vehicle 100. The vehicle 100 comprises a first axle 103, herein a front axle, and a second axle 113, herein a rear axle. The tiltable body 105 is tiltable about a pivot axis located closer to the second axle 113 than to the first axle 103 of the vehicle 100. Two driven wheels 121, 121' are provided on the first axle 103, and two driven wheels 122 (only one shown) are provided on the second axle 113.

The vehicle 100 comprises a fluid-based suspension system 200, such as a hydropneumatic suspension system. The suspension system 200 comprises a first fluid suspension device 210 provided on a first side 101 of the vehicle 100, and a second fluid suspension device 220 provided on a second side 102 of the vehicle 100. The first fluid suspension device 210 and the second fluid suspension device 220 provide suspension between the first axle 103 and the frame 104.

A computer system 400 is further provided, comprising processing circuitry 402 configured to control the suspension system 200 of the vehicle 100. In the illustrated example, the computer system 400 is illustrated as an onboard computer system, although in other examples the computer system may be an offboard computer system configured to communicate wirelessly with an onboard control unit of the vehicle 100, alternatively the computer system 400 may comprise onboard and offboard units configured to communicate over a wireless network.

In addition to the fluid-based suspension system 200, being a first fluid-based suspension system provided between the first axle 103 and the frame 104, the vehicle 100 may further comprise a second fluid-based suspension system 300 arranged to provide suspension between the frame 104 and the second axle 113 as schematically illustrated in FIG. 2.

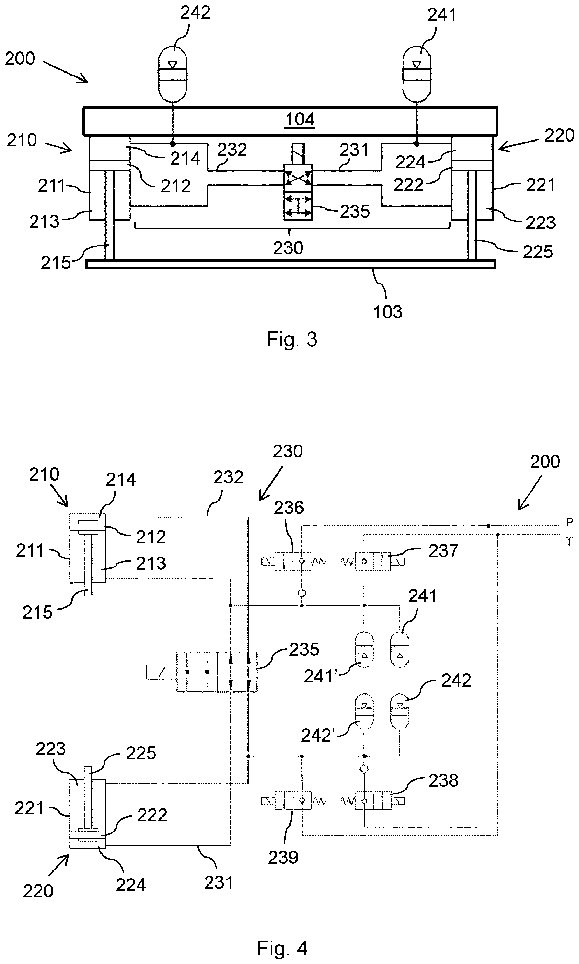

**FIG. 3** illustrates the fluid-based suspension system 200, providing suspension between the first axle 103 and the frame 104, in greater detail. **FIG. 4** is a schematic diagram of the fluid-based suspension system 200 with fluid connections to a tank T and to a pressure source P. The first fluid suspension device 210 comprises a first cylinder 211, a movable first piston 212, and a first piston rod 215 attached to the first piston 212. The movable first piston 212 divides an internal space of the first cylinder 211 into a first piston rod side chamber 213 and a first piston side chamber 214. The second fluid suspension device 220 comprises a second cylinder 221, a movable second piston 222, and a second piston rod 225 attached to the second piston 222. The movable second piston 222 divides an internal space of the second cylinder 221 into a second piston rod side chamber 223 and a second piston side chamber 224.

The area of the respective piston 212, 222 acting on the hydraulic fluid in the respective cylinder 211, 221 can be calculated from diameters of the respective piston 212, 222 and piston rod 215, 225. The area is larger in the respective piston side chamber 214, 224 than in the respective piston rod side chamber 213, 223.

The fluid-based suspension system 200 further comprises a fluid connection system 230 comprising a valve arrangement 235 configured to selectively set the fluid-based suspension system 200 to one of a first operating mode and a second operating mode. In the first operating mode, corresponding to a cross-connected operating mode illustrated in FIG. 3, the fluid connection system 230 is arranged to fluidly connect the first piston rod side chamber 213 to the second piston side chamber 224 in a first cross-connection 231. It is further configured to fluidly connect the first piston side chamber 214 to the second piston rod side chamber 223 in a second cross-connection 232. As illustrated in FIG. 3, a first accumulator 241 may be fluidly connected to the first cross-connection 231, and a second accumulator 242 may be fluidly connected to the second cross-connection 232.

The first and second cross-connections 231, 232 are fluidly isolated from one another in the first operating mode. This permits the fluid pressure in the first cross-connection 231 and first accumulator 241 to be different from the fluid pressure in the second cross-connection 232 and second accumulator 242. If the normal forces on left and right front wheels 121, 121' are distributed unequally, such as when cornering, the pressures in first and second accumulators 241, 242 will also distribute unequally, such that one pressure is increased and the other one is decreased. The cross-connections help stabilizing the vehicle. As an example, if the first piston rod 215 and the first piston 212 move upwards, the pressure in the second cross-connection 232 increases. A higher pressure in the second piston rod side chamber 223 counteracts any movement downwards of the second piston 222 and the second piston rod 225. Still, if these move downwards, the pressure in the first cross-connection 231 decreases. A lower pressure in the first piston rod side chamber 213 counteracts any movement upwards of the first piston rod 215.

In the second operating mode, the fluid connection system 230 is arranged to fluidly connect all of the first piston rod side chamber 213, the first piston side chamber 214, the second piston rod side chamber 223, and the second piston side chamber 224 to one another. In the second operating mode, the fluid pressure is the same in these four chambers as well as in the first and second accumulators 241, 242 and there is no means to distribute the normal forces on the left and right front wheels 121, 121' other than equally. The left and right front wheels 121, 121' are free to adapt their positions to the ground as long as the pressure is not changed. As an example, if the first piston rod 215 and the first piston 212 move upwards, the second piston 222 and the second piston rod 225 have to move downwards to retain the same volume in the system and not raise the pressure. This may be referred to as a pendulum-connected mode. The pendulum-connected second operating mode offers more flexibility for the suspension devices 210, 220 to adjust the cylinder movement depending on different road conditions.

As illustrated in FIG. 4, a first inlet valve 236 may be provided for selectively providing pressurized fluid to the first cross-connection 231 from the pressure source P. A first outlet valve 237 may be provided for selectively providing fluid from the first cross-connection 231 to the tank T. A second inlet valve 238 may be provided for selectively providing pressurized fluid to the second cross-connection 232 from the pressure source P. A second outlet valve 239 may be provided for selectively providing fluid from the second cross-connection 232 to the tank T. When pressurized fluid is provided via the first and/or second inlet valve(s) 236, 238, the frame 104 is raised with respect to the axle 103. Similarly, when fluid is allowed to flow to the tank T via the first and/or second outlet valves 237, 239, the frame 104 is lowered with respect to the axle 103.

As further illustrated in FIG. 4, two first accumulators 241, 241' may be provided, fluidly connected to the first cross-connection 231, and/or two second accumulators 242, 242', fluidly connected to the second cross-connection 232. When two first and/or second accumulators are provided, one of the two first 241, 241' and/or second accumulators 242, 242', respectively, may be a high-pressure accumulator with a pre-charge pneumatic pressure adapted for a loaded vehicle 100, while the other one is a low-pressure accumulator with a pre-charge pneumatic pressure adapted for an unloaded vehicle 100. In the illustrated example, the first accumulator 241 and the second accumulator 242 are high-pressure accumulators, while the first accumulator 241' and the second accumulator 242' are low-pressure accumulators.

In the illustrated example, the first and second piston rods 215, 225 are both attached to the axle 103, although in other examples, they may both be attached to the frame 104. The first and second cylinders 211, 221 are both attached to the frame 104, although in other examples, they may both be attached to the axle 103. It is also possible for one of the first and second piston rods 215, 225 to be attached to the axle 103, while the other one is connected to the frame 104.

Although a single cylinder is herein illustrated on each side of the suspension system, i.e., a single first cylinder 211 and a single second cylinder 221, more than one cylinder may be provided on each side of the suspension system, such as two cylinders.

In the illustrated example, the valve arrangement 235 comprises a single valve in the form of a 4/2 valve, i.e., a valve having four connections and two positions. The valve is movable between a first position in which the fluid-based suspension system 200 is set to the first operating mode, as illustrated in FIGS. 3 and 4, and a second position in which the fluid-based suspension system is set to the second operating mode. In other examples, a plurality of valves may be provided in order to obtain the same functionality.

The second fluid-based suspension system 300 may preferably be a cross-connected fluid-based suspension system comprising a first suspension device (not shown) provided on the first side 101 of the vehicle 100 and a second suspension device (not shown) provided on the second side 102. This ensures sufficient dynamic stability, and sufficient stability when the fluid-based suspension system 200 is operated in the second operating mode.

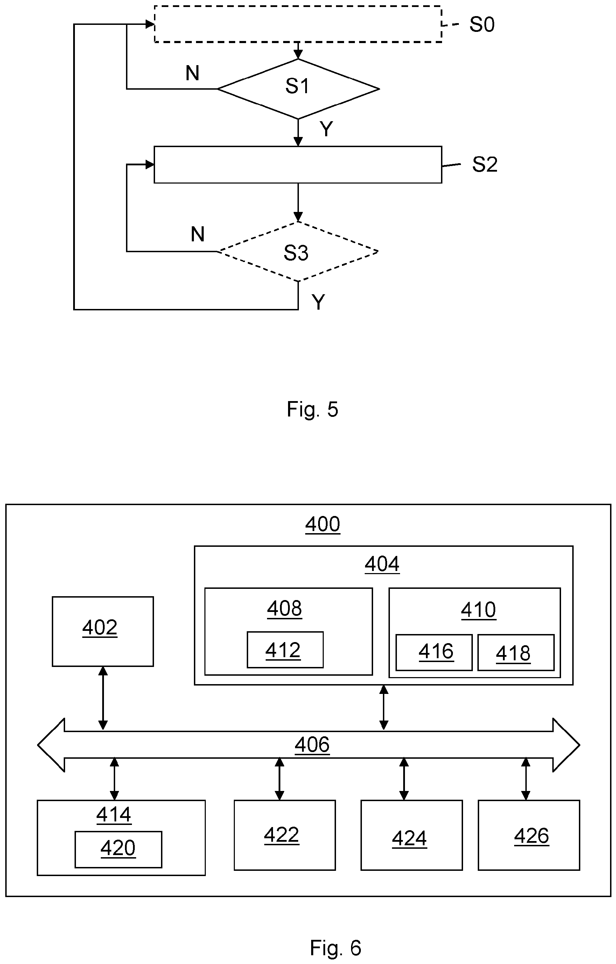

**FIG. 5** illustrates a method for controlling the fluid-based suspension system 200 according to an example of the disclosure. The method may be carried out by the processing circuitry 402 of the computer system 400 schematically indicated in FIG. 1. The method comprises the following actions, wherein optional actions are marked with dashed lines:

**Action S1:** Determining whether a predetermined activation condition for activating the second operating mode is fulfilled.

**Action S2:** In response to determining, in action S1, that the activation condition is fulfilled, activating the second operating mode.

The method is particularly useful in connection with dumping of a payload carried by the tiltable body 105 of the vehicle 100. The activation condition may hence be set such that it is considered fulfilled when there is at least one indication that the vehicle 100 is going to dump a payload. The activation condition may in some examples be considered fulfilled when a dumping condition applies, in which the vehicle is dumping or is preparing to dump the payload. The method may comprise detecting that the dumping condition applies, and in response thereto activating the second operating mode. For example, the activation condition may be considered fulfilled when the vehicle 100 is brought to a standstill, such as when it is detected that the vehicle 100 is standing still, which may be considered as a preparation for dumping the payload.

The activation condition may further be considered fulfilled when it is detected the vehicle 100 is within a zone, such as a predefined zone, in which a known dumping location is located. Hence, the method may comprise detecting that the vehicle 100 is within the zone, such as by using a navigation system of the vehicle. The navigation system may, e.g., include a satellite navigation device and various sensors attached to the vehicle 100, e.g., an accelerometer, a gyroscope, a magnetometer, etc., enabling dead reckoning. So-called geofencing may hence be used to determine that the vehicle 100 is within the zone. Alternatively, or additionally, detecting that the vehicle 100 is within the zone may comprise using object detection sensors (not shown) of the vehicle 100, such as at least one radar-based sensor, and/or at least one LIDAR based sensor, and/or at least one camera. This requires that the zone comprises detectable features characteristic of the zone.

The method may further comprise detecting, during operation of the fluid-based suspension system 200 in the second operating mode, that the payload has been dumped and that the tiltable body 105 is in a tilted position. In response thereto, the method may comprise controlling the fluid-based suspension system 200 to reduce a distance between the axle 103 and the frame 104 before the tiltable body 105 reaches a folded position in which it rests on the frame 104. This may be achieved by controlling the first outlet valve 237 and/or the second outlet valve 239 to allow fluid within the cylinders 211, 221 to flow to the tank T. The lowering of the frame 104 before the tiltable body 105 reaches its folded position restores the functionality of the pendulum-connection, which would otherwise be lost when the weight of the vehicle 100 is reduced due to dumping of the payload and the frame 104 is raised to a top position where the pendulum movement is mechanically blocked. Detecting that the payload has been dumped may comprise detecting that the weight of the vehicle 100 has decreased.

The method may be initiated as the fluid-based suspension system 200 is operated in the first operating mode, i.e., the cross-connected mode, in an **action S0.** If it is determined in the action S1 that the activation condition is not fulfilled, the method may comprise continuing to operate the fluid-based suspension system 200 in the first operating mode, i.e., the method returns to action S0.

The method may further comprise an **action S3** of, during operation of the fluid-based suspension system 200 in the second operating mode, i.e., the pendulum-connected mode, detecting that a predetermined deactivation condition is fulfilled. The deactivation condition may, for example, be considered fulfilled when a vehicle speed of the vehicle 100 increases above a speed threshold. It may further be considered fulfilled when it is detected that the dumping condition no longer applies, such as by detecting that the vehicle 100 starts from a standstill, that the tiltable body 105 has been lowered to its folded position, or that the vehicle 100 leaves the zone. The deactivation condition may in some examples be considered fulfilled when it is detected that the vehicle 100 is outside of the zone, such as the predefined zone, using the same means as used to detect that the vehicle 100 entered into the zone.

In response to detecting that the deactivation condition is fulfilled, the method may comprise controlling the fluid-based suspension system 200 to assume the first operating mode, i.e., to return to the action S0. If the deactivation condition is not fulfilled, operation in the second operating mode is continued.

In some examples, a switch between the first and second operating modes is only performed when a first distance between the frame 104 and the axle 103 at the first suspension device 210 does not differ from a second distance between the frame 104 and the axle 103 at the second suspension device 220 by more than a predetermined distance threshold, such as by more than 10 percent. In some examples, a switch from the first to the second operating mode is only performed when a first fluid pressure in the first cross-connection 231 does not differ from a second fluid pressure in the second cross-connection 232 by more than a predetermined pressure threshold, such as by more than 10 percent.

**FIG. 6** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the present disclosure are presented as a list of numbered Examples.

Example 1. A fluid-based suspension system (200) of a vehicle (100), comprising:
- a first fluid suspension device (210) provided on a first side (101) of the vehicle (100) and providing suspension between an axle (103) and a frame (104) of the vehicle, the first fluid suspension device comprising a first cylinder (211), a movable first piston (212), and a first piston rod (215) attached to the first piston, the movable first piston (212) dividing an internal space of the first cylinder into a first piston rod side chamber (213) and a first piston side chamber (214);
- a second fluid suspension device (220) provided on a second side (102) of the vehicle and providing suspension between the axle and the frame, the second fluid suspension device comprising a second cylinder (221), a movable second piston (222), and a second piston rod (225) attached to the second piston, the movable second piston (222) dividing an internal space of the second cylinder into a second piston rod side chamber (223) and a second piston side chamber (224);
- a fluid connection system (230) comprising a valve arrangement (235) configured to selectively set the fluid-based suspension system (200) to one of a first operating mode and a second operating mode;
wherein, in the first operating mode, the fluid connection system (230) is arranged to fluidly connect the first piston rod side chamber (213) to the second piston side chamber (224) in a first cross-connection (231) and to fluidly connect the first piston side chamber (214) to the second piston rod side chamber (223) in a second cross-connection (232), the first and second cross-connections (231, 232) being fluidly isolated from one another; and in the second operating mode, the fluid connection system (230) is arranged to fluidly connect all of the first piston rod side chamber (213), the first piston side chamber (214), the second piston rod side chamber (223), and the second piston side chamber (224) to one another.

Example 2. The fluid-based suspension system according to example 1, wherein the first and second piston rods (215, 225) are both attached to one of the axle (103) and the frame (104), and wherein the first and second cylinders (211, 221) are both attached to another one of the axle (103) and the frame (104).

Example 3. The fluid-based suspension system according to example 1 or 2, wherein the first and second piston rods (215, 225) are both attached to the axle (103), and wherein the first and second cylinders (211, 221) are both attached to the frame (104).

Example 4. The fluid-based suspension system according to any one of the preceding examples, wherein the valve arrangement (235) comprises a single valve.

Example 5. The fluid-based suspension system according to example 4, wherein the single valve is a valve having four connections and two positions, the valve being movable between a first position in which the fluid-based suspension system is set to the first operating mode and a second position in which the fluid-based suspension system is set to the second operating mode.

Example 6. A computer-implemented method for controlling the fluid-based suspension system according to any one of examples 1-5, the method comprising:
- determining (S 1), by processing circuitry of a computer system, whether a predetermined activation condition for activating the second operating mode is fulfilled;
- in response to determining that the activation condition is fulfilled, activating (S2), by the processing circuitry, the second operating mode.

Example 7. The method according to example 6, wherein the fluid-based suspension system is initially operated in the first operating mode, and wherein the method comprises:
- in response to determining that the activation condition is not fulfilled, continuing to operate, by the processing circuitry, the fluid-based suspension system in the first operating mode.

Example 8. The method according to example 6 or 7, further comprising:
- during operation of the fluid-based suspension system in the second operating mode, detecting (S3), by the processing circuitry, that a predetermined deactivation condition is fulfilled;
- in response to detecting that the deactivation condition is fulfilled, controlling (S0), by the processing circuitry, the fluid-based suspension system to assume the first operating mode.

Example 9. The method according to example 8, wherein the deactivation condition is considered fulfilled when a vehicle speed of the vehicle increases above a speed threshold.

Example 10. The method according to any one of examples 6-9, further comprising:
- detecting, by the processing circuitry, that a dumping condition applies, in which the vehicle is dumping or is preparing to dump a payload carried by a tiltable body of the vehicle,
wherein the activation condition is considered fulfilled when the dumping condition applies.

Example 11. The method according to example 10 in combination with example 8, wherein the deactivation condition is considered fulfilled when the dumping condition no longer applies.

Example 12. The method according to example 10 or 11, further comprising:
- during operation of the fluid-based suspension system in the second operating mode, detecting, by the processing circuitry, that the payload has been dumped and that the tiltable body is in a tilted position, and in response thereto controlling, by the processing circuitry, the fluid-based suspension system to reduce a distance between the axle and the frame before the tiltable body reaches a folded position in which it rests on the frame.

Example 13. The method according to example 12, wherein detecting that the payload has been dumped comprises detecting that a weight of the vehicle has decreased.

Example 14. The method according to any one of examples 6-13, wherein a switch between the first and second operating modes is only performed when a distance between the frame and the axle at the first suspension device does not differ from a distance between the frame and the axle at the second suspension device by more than a predetermined distance threshold.

Example 15. The method according to any one of examples 6-13, wherein a switch from the first operating mode to the second operating mode is only performed when a first fluid pressure in the first cross-connection does not differ from a second fluid pressure in the second cross-connection by more than a predetermined pressure threshold.

Example 16. A computer system (400) comprising processing circuitry (402) configured to perform the method according to any one of examples 6-15.

Example 17. A vehicle (100) comprising the fluid-based suspension system according to any one of examples 1-5.

Example 18. The vehicle according to example 17, further comprising the computer system according to example 16.

Example 19. The vehicle according to example 17 or 18, comprising a first axle (103) and a second axle (113), wherein the fluid-based suspension system (200) is a first fluid-based suspension system arranged to provide suspension between the frame (104) of the vehicle and the first axle (103), and wherein the vehicle further comprises a second fluid-based suspension system (300) arranged to provide suspension between the frame (104) and the second axle (113), the second fluid-based suspension system (300) being a cross-connected fluid-based suspension system.

Example 20. The vehicle according to example 19, further comprising a tiltable body (105), the tiltable body being mounted to the frame (104) such that it is tiltable about a pivot axis located closer to the second axle (113) than to the first axle (103) of the vehicle.

Example 21. A computer program product comprising program code for performing, when executed by the processing circuitry, the method of any of examples 6-15.

Example 22. A non-transitory computer-readable storage medium comprising instructions, which when executed by the processing circuitry, cause the processing circuitry to perform the method of any of examples 6-15.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fluid-based suspension system (200) of a vehicle (100), comprising:
- a first fluid suspension device (210) provided on a first side (101) of the vehicle (100) and providing suspension between an axle (103) and a frame (104) of the vehicle, the first fluid suspension device comprising a first cylinder (211), a movable first piston (212), and a first piston rod (215) attached to the first piston, the movable first piston (212) dividing an internal space of the first cylinder into a first piston rod side chamber (213) and a first piston side chamber (214);
- a second fluid suspension device (220) provided on a second side (102) of the vehicle and providing suspension between the axle and the frame, the second fluid suspension device comprising a second cylinder (221), a movable second piston (222), and a second piston rod (225) attached to the second piston, the movable second piston (222) dividing an internal space of the second cylinder into a second piston rod side chamber (223) and a second piston side chamber (224);
- a fluid connection system (230) comprising a valve arrangement (235) configured to selectively set the fluid-based suspension system (200) to one of a first operating mode and a second operating mode;
wherein, in the first operating mode, the fluid connection system (230) is arranged to fluidly connect the first piston rod side chamber (213) to the second piston side chamber (224) in a first cross-connection (231) and to fluidly connect the first piston side chamber (214) to the second piston rod side chamber (223) in a second cross-connection (232), the first and second cross-connections (231, 232) being fluidly isolated from one another; and
in the second operating mode, the fluid connection system (230) is arranged to fluidly connect all of the first piston rod side chamber (213), the first piston side chamber (214), the second piston rod side chamber (223), and the second piston side chamber (224) to one another.

2. The fluid-based suspension system according to claim 1, wherein the valve arrangement (235) comprises a single valve.

3. The fluid-based suspension system according to claim 2, wherein the single valve is a valve having four connections and two positions, the valve being movable between a first position in which the fluid-based suspension system (200) is set to the first operating mode and a second position in which the fluid-based suspension system is set to the second operating mode.

4. A computer-implemented method for controlling the fluid-based suspension system (200) according to any one of claims 1-3, the method comprising:
- determining (S 1), by processing circuitry (402) of a computer system (400), whether a predetermined activation condition for activating the second operating mode is fulfilled;
- in response to determining that the activation condition is fulfilled, activating (S2), by the processing circuitry (402), the second operating mode.

5. The method according to claim 4, further comprising:
- during operation of the fluid-based suspension system (200) in the second operating mode, detecting (S3), by the processing circuitry (402), that a predetermined deactivation condition is fulfilled;
- in response to detecting that the deactivation condition is fulfilled, controlling (S0), by the processing circuitry (402), the fluid-based suspension system to assume the first operating mode.

6. The method according to any one of claims 4-5, further comprising:
- detecting, by the processing circuitry, that a dumping condition applies, in which the vehicle (100) is dumping or is preparing to dump a payload carried by a tiltable body (105) of the vehicle (100),
wherein the activation condition is considered fulfilled when the dumping condition applies.

7. The method according to claim 6 in combination with claim 5, wherein the deactivation condition is considered fulfilled when the dumping condition no longer applies.

8. The method according to claim 6 or 7, further comprising:
- during operation of the fluid-based suspension system (200) in the second operating mode, detecting, by the processing circuitry (402), that the payload has been dumped and that the tiltable body (105) is in a tilted position, and in response thereto controlling, by the processing circuitry (402), the fluid-based suspension system (200) to reduce a distance between the axle (103) and the frame (104) before the tiltable body (105) reaches a folded position in which it rests on the frame (104).

9. The method according to any one of claims 4-8, wherein a switch between the first and second operating modes is only performed when a distance between the frame (104) and the axle (103) at the first suspension device (210) does not differ from a distance between the frame (104) and the axle (103) at the second suspension device (220) by more than a predetermined distance threshold.

10. A computer system (400) comprising processing circuitry (402) configured to perform the method according to any one of claims 4-9.

11. A vehicle (100) comprising the fluid-based suspension system (200) according to any one of claims 1-3.

12. The vehicle according to claim 11, further comprising the computer system (400) according to claim 10.

13. The vehicle according to claim 11 or 12, comprising a first axle (103) and a second axle (113), wherein the fluid-based suspension system (200) is a first fluid-based suspension system arranged to provide suspension between the frame (104) of the vehicle (100) and the first axle (103), and wherein the vehicle (100) further comprises a second fluid-based suspension system (300) arranged to provide suspension between the frame (104) and the second axle (113), the second fluid-based suspension system (300) being a cross-connected fluid-based suspension system.

14. A computer program product comprising program code for performing, when executed by the processing circuitry, the method of any of claims 4-9.

15. A non-transitory computer-readable storage medium comprising instructions, which when executed by the processing circuitry, cause the processing circuitry to perform the method of any of claims 4-9.
